# EUROPEAN PATENT APPLICATION

(11) **EP 3 206 343 A1**
(43) Date of publication of application: **16.08.2017**
(21) Application number: 16201381.7
(22) Date of filing: 30.11.2016
(51) Int. Cl.: H04L 12/70, G06F 9/50

(54) **DATA TRANSMITTING DEVICE, METHOD OF TRANSMITTING DATA, AND DATA TRANSMITTING PROGRAM**

(30) Priority: 09.02.2016 JP 2016023088
(71) Applicant: FUJITSU LIMITED, Kawasaki-shi Kanagawa 211-8588 (JP)
(72) Inventor: Mutoh, Ryoichi, Kanagawa, 211-8588 (JP)
(74) Representative: Hoffmann Eitle

(57) **Abstract**

A data transmitting device configured to transmit data to a data receiving device via a communication line, the data transmitting device determines, based on first bandwidth information indicating a first bandwidth of the communication line from the data transmitting device to the data receiving device and first load information indicating a first load of the data receiving device, whether a first process is to be executed on first data before the first data is transmitted to the data receiving device, when it is determined that the first process is to be executed, executes the first process on the first data, and transmits, to the data receiving device, the first data on which the first process is executed, and when it is not determined that the first process is to be executed, transmits the first data to the data receiving device without executing the first process.

## Description

### TECHNICAL FIELD

The embodiment discussed herein is related to a data transmitting device, a method of transmitting data, and a data transmitting program.

### BACKGROUND ART

Various techniques for increasing communication rates of networks (for example, a wide area network (WAN) and the like) are used. For example, a WAN optimization technique for increasing a communication rate in a WAN environment is used.

The WAN optimization technique is to execute optimization such as the removal of duplication of data to be transmitted or the compression of the data to be transmitted. By optimizing the data to be transmitted, an increase in the amount of traffic in a communication line is suppressed and throughput when data communication is executed is improved.

As a related technique, a technique for taking over a parameter upon the switching of a congestion control function between a transmitting communication device and a receiving communication device has been proposed. In addition, a technique for determining a loading state based on central processing unit (CPU) utilization and buffer utilization has been proposed.

In addition, a technique for instructing only a master device with a low priority to limit a band and avoiding the determination of the priority on the side of the master device has been proposed.

In addition, a technique for optimizing a network across multiple layers at certain times without affecting a service has been proposed. In addition, a technique for integrating functions of some protocol layers between the layers within a network has been proposed.

In addition, a technique for ensuring bands to be used by a protocol and an application service based on priorities of the protocol and application service regardless of whether or not connection-oriented communication is executed has been proposed. Related-art documents are U.S. Patent Application Publication. No. 2012-0213069, Japanese Laid-open Patent Publication No. 2011-166636, Japanese Laid-open Patent Publication No. 2010-218351, Japanese Laid-open Patent Publication No. 2012-119999, Japanese National Publication of International Patent Application No. 2005-518717, and Japanese Laid-open Patent Publication No. 2002-044136.

### SUMMARY

### TECHNICAL PROBLEM

If a process of optimizing data to be transmitted is achieved by an application program executed by a communication device, a load caused by the optimization process is applied to the communication device. The load of the communication device dynamically changes and thus increases in some cases.

When the load of the communication device increases, a hardware resource of the communication device that is applied to the process of optimizing the data to be transmitted is reduced and a time for the optimization process increases. Thus, the present inventor has obtained the knowledge that the throughput is reduced.

### SOLUTION TO PROBLEM

According to an aspect of the invention, a data transmitting device configured to transmit data to a data receiving device via a communication line, the data transmitting device includes a memory and a processor coupled to the memory and configured to determine, based on first bandwidth information indicating a first bandwidth of the communication line from the data transmitting device to the data receiving device and first load information indicating a first load of the data receiving device, whether a first process is to be executed on first data before the first data is transmitted to the data receiving device, when it is determined that the first process is to be executed, execute the first process on the first data, and transmit, to the data receiving device, the first data on which the first process is executed, and when it is not determined that the first process is to be executed, transmit the first data to the data receiving device without executing the first process on the first data.

### ADVANTAGEOUS EFFECTS OF INVENTION

According to one aspect, throughput may be improved in consideration of a load of a communication device.

### BRIEF DESCRIPTION OF DRAWINGS

FIG. 1 is a diagram illustrating an example of a system according to an embodiment;
FIG. 2 is a functional block diagram illustrating an example of communication devices;
FIG. 3 is a functional block diagram illustrating an example of the transmitting and receiving communication devices;
FIG. 4 is a graph (first) illustrating an example of relationships between a line rate and throughput;
FIG. 5 is a graph (second) illustrating an example of the relationship between the line rate and the throughput;
FIG. 6 is a diagram illustrating an example of a performance characteristic table;
FIG. 7 is a diagram illustrating a CPU load of the receiving communication device that is stored in a storage unit;
FIG. 8 is a diagram illustrating an example of data to be transmitted;
FIG. 9 is a flowchart (first) illustrating an example of a process according to the embodiment;
FIG. 10 is a flowchart (second) illustrating an example of a process according to the embodiment;
FIG. 11 is a sequence chart illustrating an example of a process of generating the performance characteristic table according to the embodiment;
FIG. 12 is a diagram illustrating an application example 1;
FIG. 13 is a diagram illustrating an example of a load table according to the application example 1;
FIG. 14 is a flowchart (first) illustrating an example of the flow of a process according to the application example 1;
FIG. 15 is a flowchart (second) illustrating an example of the flow of a process according to the application example 1;
FIG. 16 is a sequence chart illustrating an example of a process of generating a load table according to the application example 1;
FIG. 17 is a diagram illustrating an application example 2;
FIG. 18 is a diagram illustrating an example of a performance characteristic table according to the application example 2;
FIG. 19 is a diagram illustrating an example of a load table according to the application example 2;
FIG. 20 is a flowchart illustrating an example of the flow of a process according to the application example 2;
FIG. 21 is a sequence chart illustrating an example of a process of generating the performance characteristic table according to the application table 2;
FIG. 22 is a sequence chart illustrating an example of a process of generating the load table according to the application table 2; and
FIG. 23 is a diagram illustrating an example of hardware configurations of the communication devices.

### DESCRIPTION OF EMBODIMENT

### Example of System According to Embodiment

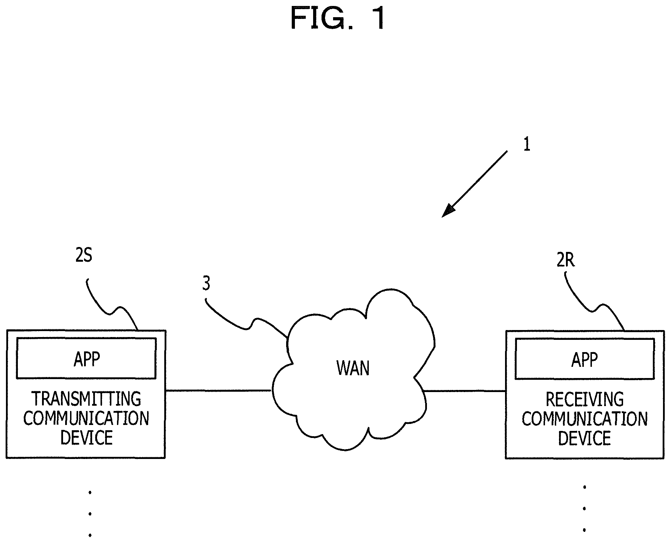

Hereinafter, an embodiment is described with reference to the accompanying drawings. FIG. 1 illustrates an example of a system 1 according to the embodiment. In the system 1, a transmitting communication device 2S and a receiving communication device 2R are coupled to each other and able to communicate with each other via a WAN 3.

Hereinafter, the transmitting communication device 2S and the receiving communication device 2R are collectively referred to as communication devices 2 in some cases. The embodiment assumes a case where the communication devices 2 communicate with each other via the WAN 3. One of the communication devices 2 that transmits data is the transmitting communication device 2S, while the other communication device 2 that receives the data is the receiving communication device 2R.

A plurality of transmitting communication devices 2S may be provided and a plurality of receiving communication devices 2R may be provided. The network for communication is not limited to the WAN. For example, the network may be a local area network (LAN) or the like.

Each of the communication devices 2 executes an application program (hereinafter merely referred to as application). The application (indicated by APP in FIG. 1) may be executed by a terminal other than the communication devices 2. In this case, the terminal that is configured to execute the application is coupled to the communication devices 2.

The communication devices 2 may be WAN optimization controllers (WOCs), for example. The WAN optimization controllers are installed at both edges of the network and increase the communication rate of the transport layer by replacing the TCP with a high-speed protocol.

The communication devices 2 include a function of optimizing data to be transmitted from the communication devices 2. Traffic that flows in a communication line of the WAN 3 is suppressed by the optimization of the data to be transmitted, and even if the quality of the communication line is low, throughput (communication performance) may be improved.

On the other hand, the throughput may be reduced by the execution of the process of optimizing the data to be transmitted. The communication devices 2 optimize the data by a software process. For example, when loads applied to CPUs of the communication devices 2 are high, a time for the optimization of the data increases. In this case, when the process of optimizing the data is executed, the throughput is reduced.

In the embodiment, the transmitting communication device 2S controls whether the data to be transmitted is optimized, based on optimization performance corresponding to the CPU load of the destination (receiving communication device 2R) of the data and a line rate of the communication line.

Loads of the communication devices 2 according to the embodiment are not only the CPU loads but also loads of main and auxiliary storage devices in some cases, for example. When the loads of the main and auxiliary storage devices are high, a time for the process of optimizing data to be transmitted increases and the throughput is reduced.

### Example of Communication Devices

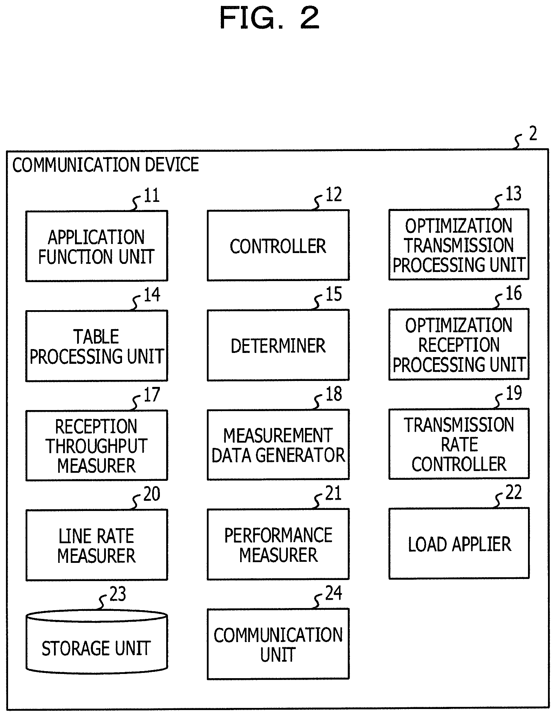

Next, an example of the communication devices 2 is described. FIG. 2 illustrates the example of the communication devices 2. A communication device 2 illustrated in the example of FIG. 2 includes functions of both transmitting communication device 2S and receiving communication device 2R. This is due to the fact that the communication device 2 may function as the transmitting communication device 2S and the receiving communication device 2R.

The communication device 2 that transmits data is the transmitting communication device 2S, while the communication device 2 that receives the data is the receiving communication device 2R. If the transmitting communication device 2 is treated as a reference, a destination device is the receiving communication device 2R.

The communication device 2 includes an application functional unit 11, a controller 12, an optimization transmission processing unit 13, a table processing unit 14, a determiner 15, an optimization reception processing unit 16, a reception throughput measurer 17, a measurement data generator 18, and a transmission rate controller 19. In addition, the communication device 2 includes a line rate measurer 20, a performance measurer 21, a load applier 22, a storage unit 23, and a communication unit 24.

The application function unit 11 functions as the aforementioned application. The application may be a TCP application, for example. As described above, if the terminal that is different from the communication device 2 executes the application, the application function unit 11 is not included in the communication device 2.

The controller 12 executes various types of control on the communication device 2. The optimization transmission processing unit 13 executes the process of optimizing data to be transmitted. The optimization transmission processing unit 13 may optimize the data to be transmitted or execute optimization such as the removal of duplication of the data to be transmitted or the compression of the data to be transmitted, for example.

The duplication removal is optimization to be executed to store data obtained by the first communication in a cache or the like and provide only an index in the second and later communication of the data. The communication device 2 acquires the data from the cache or the like based on the provided index. Thus, the amount of the data to be transmitted is reduced.

In addition, the compression is optimization to be executed to reduce the amount of the data by using an appropriate method. In this case, the receiving communication device 2R restores the compressed data.

The table processing unit 14 executes a process such as the update of various tables stored in the storage unit 23. A performance characteristic table is stored in the storage unit 23 and indicates relationships between the CPU load of the receiving communication device 2R, line rates, and information indicating optimization performance.

The line rates are line rates of the communication line between the transmitting communication device 2S and the receiving communication device 2R. The line rates indicate available bands between the transmitting communication device 2S and the receiving communication device 2R.

The line rates are a line rate of communication from the transmitting communication device 2S to the receiving communication device 2R and a line rate of communication from the receiving communication device 2R to the transmitting communication device 2S. The line rates indicated in the performance characteristic table are the line rates of the communication from the transmitting communication device 2S to the receiving communication device 2R.

The information that indicates the optimization performance indicates throughput when the data is optimized and throughput when the data is not optimized.

Hereinafter, the throughput when the data is optimized is referred to as on-throughput in some cases, while the throughput when the data is not optimized is referred to as off-throughput in some cases. The on-throughput is an example of first throughput, while the off-throughput is an example of second throughput.

The determiner 15 determines whether or not the data to be transmitted is to be optimized, based on load information indicating the CPU load of the receiving communication device 2R, a line rate measured by the line rate measurer 20, and the performance characteristic table stored in the storage unit 23. The performance characteristic table is an example of a first table.

When the communication unit 24 receives optimized data, the optimization reception processing unit 16 executes a process of restoring the optimized data. For example, the optimization reception processing unit 16 executes a process of restoring the data subjected to the duplication removal, the compression, or the like.

The reception throughput measurer 17 measures the speed of a reception process (including the restoration process) executed by the optimization reception processing unit 16. Since the measured speed is the speed of the process of receiving the optimized data by the communication unit 24 and executing the reception process by the optimization reception processing unit 16, the speed indicates the on-throughput.

The measurement data generator 18 generates data for measurement. In the embodiment, the data for the measurement is referred to as a dummy packet. The generated dummy packet is transmitted from the transmitting communication device 2S to the receiving communication device 2R. The dummy packet described in the embodiment is data for the generation of the performance characteristic table and is an example of first measurement data.

The transmission rate controller 19 executes control to change the rate of transmitting the dummy packet from the communication device. The line rate measurer 20 measures the line rate of the communication line coupled to the communication device 2.

The performance measurer 21 measures communication performance (throughput) of the data transmitted from the transmitting communication device 2S to the receiving communication device 2R. The performance measurer 21 of the receiving communication device 2R measures throughput of the data subjected to the reception process by the optimization reception processing unit 16.

The load applier 22 applies a load to the CPU of the communication device 2. For example, the load applier 22 may apply the load to the communication device 2 by causing the communication device 2 to execute an arbitrary program.

The load applier 22 applies an arbitrary load to the CPU of the communication device 2. In the embodiment, the CPU load is expressed by a percentage. For example, when the CPU load is "100%", the load of the CPU of the communication device 2 is the maximum.

The storage unit 23 stores the various tables. The tables stored in the storage unit 23 are updated by the table processing unit 14. The communication unit 24 communicates with the other communication device 2.

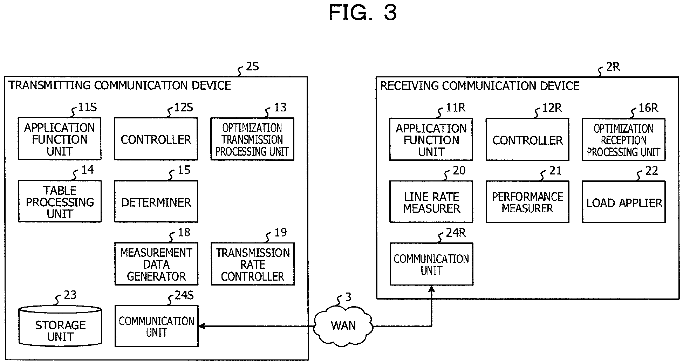

FIG. 3 illustrates an example in which the communication device 2 illustrated in FIG. 2 is divided into the transmitting communication device 2S and the receiving communication device 2R. In the example of FIG. 3, "S" is added to common functions of the transmitting communication device 2S among the units of the transmitting and receiving communication devices 2S and 2R so that the common functions of the transmitting communication device 2S are expressed with "S", while "R" is added to common functions of the receiving communication device 2R among the units of the transmitting and receiving communication devices 2S and 2R so that the common functions of the receiving communication device 2R are expressed with "R".

As illustrated in the example of FIG. 3, the transmitting communication device 2S includes the optimization transmission processing unit 13, the table processing unit 14, the determiner 15, the measurement data generator 18, the transmission rate controller 19, and the storage unit 23.

The receiving communication device 2R includes the line rate measurer 20, the performance measurer 21, and the load applier 22. The application function unit 11, the controller 12, the optimization reception processing unit 16, and the communication unit 24 are included in each of the transmitting and receiving communication devices 2S and 2R.

### Example of Determination of Whether or not Optimization is to be Executed

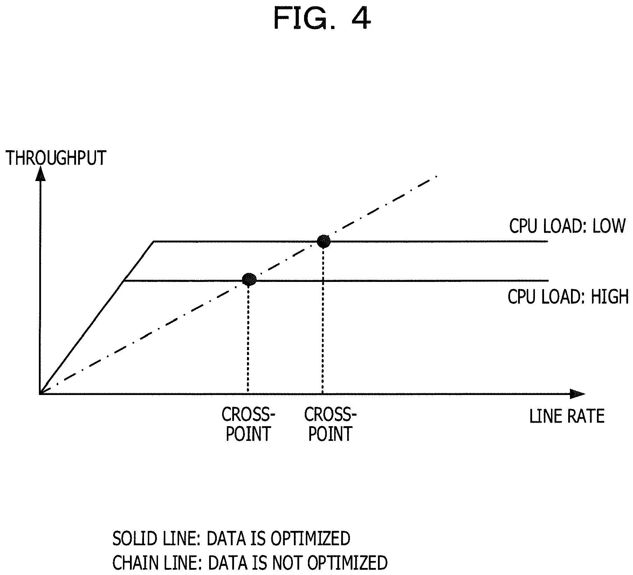

FIG. 4 is a graph illustrating an example of relationships between the line rate and the throughput measured by the performance measurer 21 of the receiving communication device 2R. Each of solid lines indicates the relationship between the line rate and the throughput when the data is optimized, while a chain line indicates the relationship between the line rate and the throughput when the data is not optimized.

As illustrated in the example of FIG. 4, as the line rate increases, the throughput when the data is optimized increases and reaches a fixed value (or the maximum value). The maximum value of the throughput when the CPU load is low is higher than the maximum value of the throughput when the CPU load is high.

The CPU load of the receiving communication device 2R dynamically changes. For example, the CPU load of the receiving communication device 2R dynamically changes based on an execution state of the application function unit 11R or the like.

If the CPU load of the receiving communication device 2R is low, the amount of a CPU resource able to be assigned to the process of restoring optimized data is large. In this case, the speed of the restoration process executed by the optimization reception processing unit 16R of the receiving communication device 2R is high and the throughput measured by the performance measurer 21 is high.

On the other hand, if the CPU load of the receiving communication device 2R is high, the amount of the CPU resource able to be assigned to the process of restoring the optimized data is small. In this case, the speed of the restoration process executed by the optimization reception processing unit 16R of the receiving communication device 2R is low and the throughput measured by the performance measurer 21 is low.

If the data is not optimized, the throughput increases with an increase in the line rate. Then, the throughput (off-throughput) when the data is not optimized is higher than the throughput (on-throughput) when the data is optimized, or a reverse phenomenon occurs.

A point at which the reverse phenomenon occurs is referred to as a cross-point. As illustrated in the example of FIG. 4, the cross-point varies depending on whether the CPU load of the receiving communication device 2R is high or low.

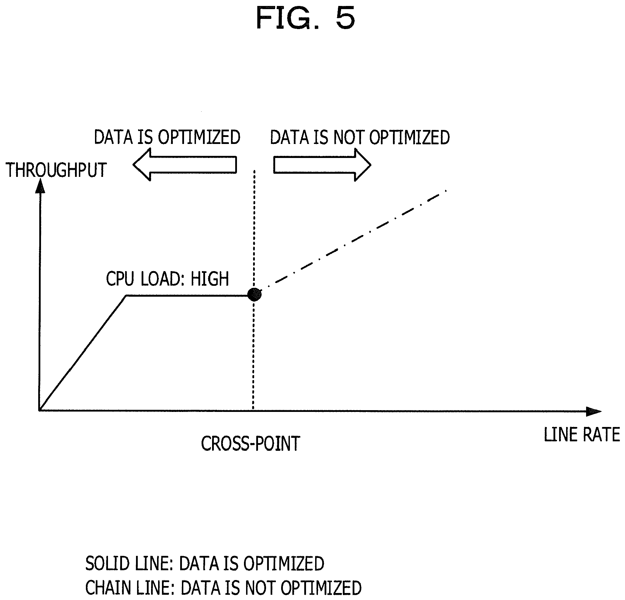

FIG. 5 illustrates an example of a graph illustrating the case where the CPU load of the receiving communication device 2R is high. Before the line rate reaches the cross-point, the throughput when the data is optimized is higher than the throughput when the data is not optimized. After the line rate reaches the cross-point, the throughput when the data is not optimized is higher than the throughput when the data is optimized.

It is, therefore, preferable that the data be optimized before the line rate reaches the cross-point and that the data be not optimized after the line rate reaches the cross-point. As described above, however, since the CPU load of the receiving communication device 2R dynamically changes, the cross-point also dynamically changes.

If the determination of whether or not the optimization process is to be executed is made without consideration of the CPU load of the receiving communication device 2R, the cross-point changes with a change in the CPU load and it is difficult to appropriately determine whether or not the data to be transmitted is to be optimized. As a result, the throughput may be reduced.

Thus, the determiner 15 of the transmitting communication device 2S acquires, from the receiving communication device 2R, load information indicating the CPU load of the receiving communication device 2R and line rate information indicating the line rate measured by the line rate measurer 20.

The determiner 15 of the transmitting communication device 2S acquires, from the performance characteristic table stored in the storage unit 23, optimization performance (information indicating the on-throughput and the off-throughput) corresponding to the acquired load information and the acquired line rate information. Then, the determiner 15 determines, based on the acquired optimization performance, whether or not the optimization is to be executed.

### Example of Performance Characteristic Table

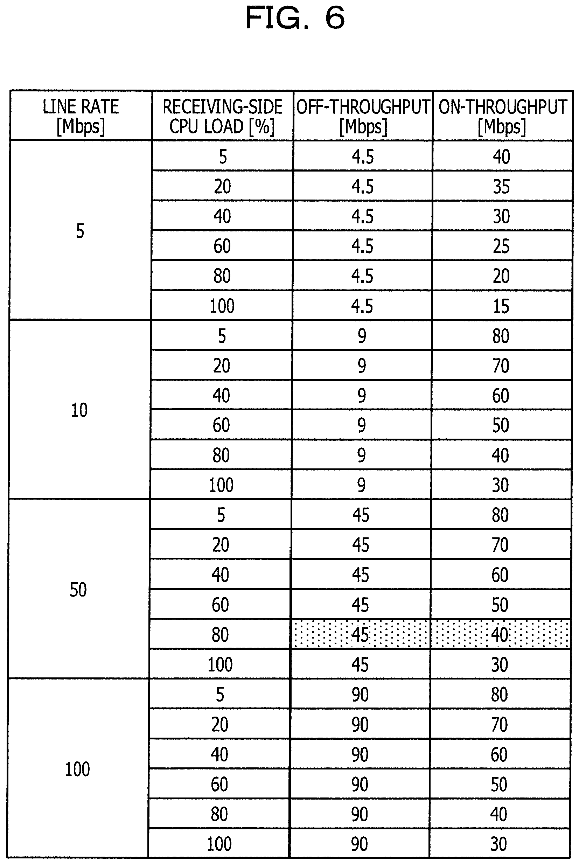

Next, an example of the performance characteristic table is described with reference to FIG. 6. The performance characteristic table is stored in the storage unit 23. As illustrated in the example of FIG. 6, the performance characteristic table includes items for the line rate, the receiving-side CPU load, the off-throughput, and the on-throughput.

In the example of FIG. 6, the off-throughput is indicated by "OFF-THROUGHPUT", and the on-throughput is indicated by "ON-THROUGHPUT".

In the embodiment, the dummy packet generated by the measurement data generator 18 is transmitted by the communication unit 24S of the transmitting communication device 2S to the receiving communication device 2R. In this case, the transmission rate controller 19 changes the rate of transmitting the dummy packet.

In addition, the controller 12S notifies the receiving communication device 2R that the CPU load of the receiving communication device 2R is to be changed. The load applier 22 of the receiving communication device 2R changes, based on this notification, the load to be applied to the receiving communication device 2R.

Thus, the transmitting communication device 2S transmits the dummy packet to the receiving communication device 2R while changing the transmission rate and the CPU load of the receiving communication device 2R. In this case, the transmitting communication device 2S transmits two types of the packet, the dummy packet optimized by the optimization transmission processing unit 13 and the dummy packet that is not optimized.

In the receiving communication device 2R, the optimized dummy packet is restored by the optimization reception processing unit 16R. The performance measurer 21 measures the on-throughput based on the speed of the restoration process.

On the other hand, for the dummy packet that is not optimized, the performance measurer 21 measures the off-throughput based on the rate of receiving the dummy packet by the communication unit 24R. In this manner, the aforementioned throughput of the two types is measured.

In the example of FIG. 6, the transmission rate controller 19 executes control to cause the dummy packet to be transmitted at a rate of 5 Mbps, for example. Thus, the line rate is simulated to be 5 Mbps. Under this condition, the transmitting communication device 2S changes the CPU load of the receiving communication device 2R.

In the example of FIG. 6, the transmitting communication device 2S changes the CPU load of the receiving communication device 2R to 5%, 20%, 40%, 60%, 80%, and 100%, for example. Under these conditions, the performance measurer 21 measures the on-throughput and the off-throughput.

Information of the optimization performance that indicates the measured on-throughput and the measured off-throughput is transmitted from the receiving communication device 2R to the transmitting communication device 2S. The table processing unit 14 of the transmitting communication device 2S causes the received information of the optimization performance to be stored in the performance characteristic table stored in the storage unit 23.

In the example of FIG. 6, the transmission rate controller 19 executes control to cause the dummy packet to be transmitted at rates of 10 Mbps, 50 Mbps, and 100 Mbps. In this case, 100 Mbps is the maximum value of the transmission rate and is the maximum value of the line rate.

Then, by repeating the aforementioned process, values are stored in the items of the performance characteristic table illustrated in the example of FIG. 6. The information that is stored in the performance characteristic table and indicates the off-throughput and the on-throughput indicates the optimization performance.

In the example of FIG. 6, the time when the line rate is 50 Mbps and the receiving-side CPU load is 80% is the aforementioned cross-point. In the example of the performance characteristic table illustrated in FIG. 6, the cross-point is indicated by hatching.

Specifically, before the line rate reaches the cross-point, the on-throughput is higher than the off-throughput. However, after the line rate reaches the cross-point, the off-throughput is higher than the on-throughput. Thus, the aforementioned reverse phenomenon occurs at the cross-point.

The determiner 15 determines whether or not the optimization is to be executed, based on the optimization performance corresponding to the line rate of the communication line between the transmitting communication device 2S and the receiving communication device 2R and the CPU load of the receiving communication device 2R.

The aforementioned line rate is the line rate of the WAN 3 and measured by the line rate measurer 20 of the receiving communication device 2R. Thus, the line rate is the line rate of the communication from the transmitting communication device 2S to the receiving communication device 2R. The transmitting communication device 2S acquires, from the receiving communication device 2R, information of the line rate and the load information indicating the CPU load.

For example, if the acquired information of the line rate indicates 50 Mbps and the acquired load information indicates 60%, the optimization performance corresponding to the line rate and the CPU load indicates that the on-throughput is higher than the off-throughput.

In this case, since the throughput when the data to be transmitted to the receiving communication device 2R is optimized is higher, the determiner 15 determines that the data is to be optimized. Thus, the optimization transmission processing unit 13 optimizes the data to be transmitted.

For example, if the acquired information of the line rate indicates 50 Mbps and the acquired load information indicates 80%, the optimization performance corresponding to the line rate and the CPU load indicates that the off-throughput is higher than the on-throughput.

In this case, since the throughput when the data to be transmitted to the receiving communication device 2R is not optimized is higher, the determiner 15 determines that the data is not to be optimized. Thus, the data is transmitted from the communication unit 24S to the receiving communication device 2R without being subjected to the optimization process by the optimization transmission processing unit 13.

Values of the line rate in the performance characteristic table are not limited to values illustrated in the example of FIG. 6. In addition, values of the receiving-side CPU load in the performance characteristic table are not limited to the example of FIG. 6. The granularities of the line rate and the receiving-side CPU load in the performance characteristic table may be smaller or larger than those illustrated in the example of FIG. 6.

### Example of Notified Load Information

In the embodiment, the controller 12R of the receiving communication device 2R executes control to periodically transmit the load information indicating the CPU load of the receiving communication device 2R to the transmitting communication device 2S. When the transmitting communication device 2S receives the load information from the receiving communication device 2R, the table processing unit 14 causes the received load information to be stored in the storage unit 23.

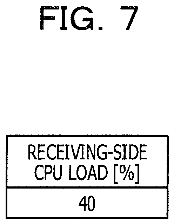

FIG. 7 illustrates an example of the CPU load, stored in the storage unit 23, of the receiving communication device 2R. Every time the load information is received from the receiving communication device 2R, the table processing unit 14 updates the information indicating the CPU load and stored in the storage unit 23.

### Example of Data to be Transmitted

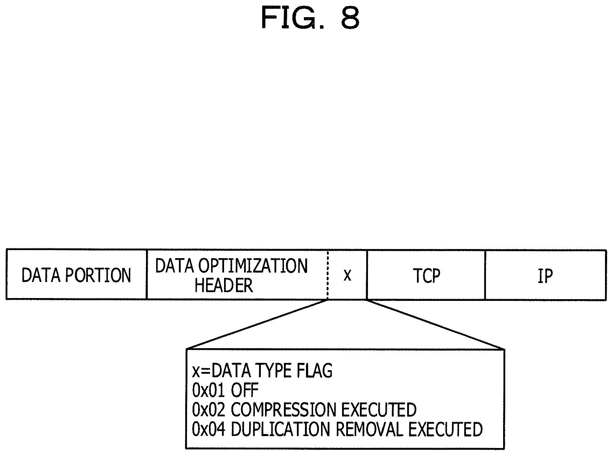

FIG. 8 illustrates an example of the data to be transmitted. The data is a packet and is also applied to the dummy packet. The data (packet) illustrated in the example of FIG. 8 includes information indicating a data portion, a data optimization header, the TCP, and the Internet Protocol (IP).

In the data optimization header, a data identification flag that indicates whether or not the data is already optimized is included. If the data is already optimized, information that identifies the type of the optimization is included in the data optimization header.

The optimization reception processing unit 16R of the receiving communication device 2R recognizes, based on the data identification flag, whether or not the data is already optimized and the type of the optimization. If the data is already optimized, the optimization reception processing unit 16R executes the restoration process based on the type of the optimization.

A method of identifying whether or not the data is already optimized and a method of identifying the type of the optimization are not limited to the aforementioned example.

### Flowchart Illustrating Example of Flow of Process According to Embodiment

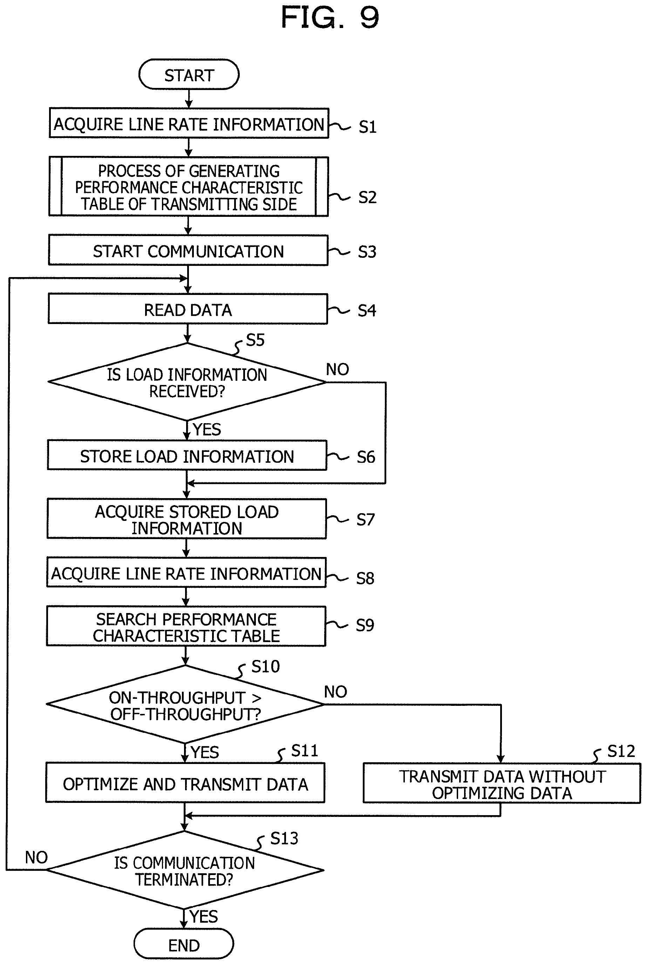

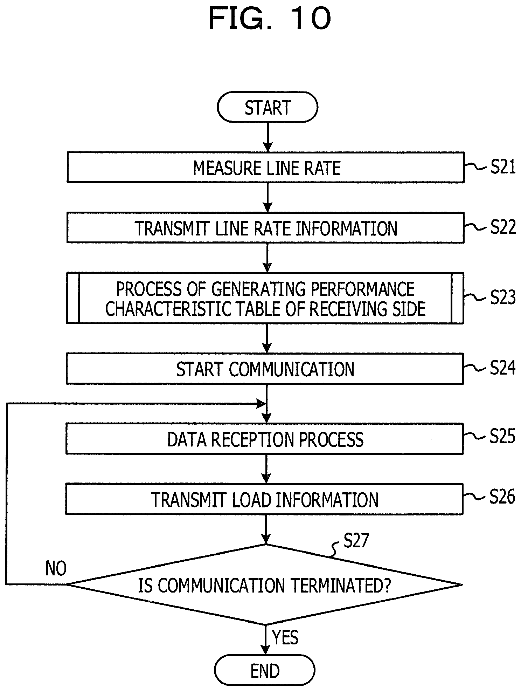

The flow of a whole process according to the embodiment is described with reference to examples of flowcharts that are illustrated in FIGs. 9 and 10. FIG. 9 illustrates an example of the flow of a whole process that is executed by the transmitting communication device 2S.

The transmitting communication device 2S acquires the line rate information from the receiving communication device 2R (in step S1). The line rate information is information indicating the line rate of the communication from the transmitting communication device 2S to the receiving communication device 2R and indicating the line rate measured by the line rate measurer 20 of the receiving communication device 2R.

The transmitting communication device 2S executes a process of generating the performance characteristic table (in step S2). As described above, the transmitting communication device 2S changes the rate of transmitting the dummy packet and changes the CPU load of the receiving communication device 2R.

In the process of generating the performance characteristic table, the transmission rate is changed. The transmission rate controller 19 changes the rate of transmitting the dummy packet while treating, as the maximum value, the line rate indicated in the line rate information acquired in step S1.

The transmitting communication device 2S acquires, from the receiving communication device 2R, the information (optimization performance) indicating the on-throughput and the off-throughput that have been measured by the performance measurer 21. The table processing unit 14 of the transmitting communication device 2S causes values of the on-throughput and the off-throughput that are indicated in the acquired information of the optimization performance to be stored in the performance characteristic table stored in the storage unit 23.

The processes of steps S1 and S2 are executed before communication is started by the application function unit 11S. After the process of step S2, the communication is started by the application function unit 11S (in step S3).

The application function unit 11S of the transmitting communication device 2S communicates with the application function unit 11R of the receiving communication device 2R. The processes of steps S1 and S2 may be executed upon the activation of the transmitting communication device 2S.

Data to be transmitted from the application function unit 11S to the application function unit 11R is read (in step S4). For example, the data may be data blocks.

The controller 12S determines whether or not the communication unit 24S received the load information from the receiving communication device 2R (in step S5). As described above, the receiving communication device 2R periodically notifies the transmitting communication device 2S of the load information.

If the controller 12S determines that the load information was received (YES in step S5), the controller 12S causes the received load information to be stored in the storage unit 23. Thus, the load information stored in the storage unit 23 is updated. If the controller 12S determines that the load information was not received (NO in step S5), the controller 12S does not update the load information.

The determiner 15 acquires the load information stored in the storage unit 23. The load information is information indicating the latest CPU load of the receiving communication device 2R.

The controller 12S causes the line rate measurer 20 of the receiving communication device 2R to measure the line rate and executes control to acquire the line rate information indicating the measured line rate (in step S8). Thus, the determiner 15 acquires the CPU load of the receiving communication device 2R.

The determiner 15 searches, from the performance characteristic table stored in the storage unit 23, the optimization performance corresponding to the acquired line rate and the information indicating the CPU load. The optimization performance is the information indicating the on-throughput and the off-throughput.

The determiner 15 determines whether the on-throughput or the off-throughput is higher than the other, based on the optimization performance acquired as a result of the aforementioned search (in step S10).

If the on-throughput is higher than the off-throughput (YES in step S10), the communication unit 24S transmits the data optimized by the optimization transmission processing unit 13 (in step S11). If the on-throughput is equal to or lower than the off-throughput (NO in step S10), the communication unit 24S transmits the data without optimizing the data (in step S12).

The controller 12S determines whether or not the data communication executed by the application function unit 11S is already terminated (in step S13). If the controller 12S determines that the data communication is not terminated (NO in step S13), the process returns to step S4. If the controller 12S determines that the data communication is already terminated (YES in step S13), the process is terminated.

FIG. 10 illustrates an example of the flow of a whole process that is executed by the receiving communication device 2R. In the aforementioned step S1, the transmitting communication device 2S acquires the line rate information from the receiving communication device 2R.

Thus, the line rate measurer 20 measures the line rate of the communication from the transmitting communication device 2S to the receiving communication device 2R (in step S21). For example, the line rate measurer 20 may measure, as the line rate, the rate of receiving the dummy data transmitted in burst transmission.

The receiving communication device 2R transmits the line rate information indicating the measured line rate to the transmitting communication device 2S (in step S22).

The receiving communication device 2R executes the process of generating the performance characteristic table (in step S23). As described above, the receiving communication device 2R measures the line rate and transmits the line rate information indicating the measured line rate and the load information indicating the CPU load to the transmitting communication device 2S based on the control by the transmitting communication device 2S.

The communication is started between the application function unit 11S of the transmitting communication device 2S and the application function unit 11R of the receiving communication device 2R (in step S24). When the communication unit 24R receives the data (packet) from the transmitting communication device 2S, the optimization reception processing unit 16R extracts the header of the received packet.

For example, if the data optimization header included in the packet indicates that the optimization process was executed, the optimization reception processing unit 16R executes the restoration process (in step S25). For example, if the data optimization header indicates that the compression was executed, the optimization reception processing unit 16R executes the restoration process by decompressing the compressed data.

If the data optimization header included in the packet indicates that the optimization process was not executed, the restoration process is not executed on the packet.

As described above, the receiving communication device 2R periodically transmits the load information indicating the CPU load of the receiving communication device 2R to the transmitting communication device 2S (in step S26). Thus, in the storage unit 23 of the transmitting communication device 2S, the load information that indicates the latest CPU load of the receiving communication device 2R is stored.

The controller 12R determines whether or not the communication executed by the application function unit 11S and the application function unit 11R is already terminated (in step S27). If the communication is not terminated (NO in step S27), the process returns to step S25. If the communication is already terminated (YES in step S27), the process is terminated.

Thus, the determiner 15 determines whether or not the data to be transmitted is to be optimized, based on the optimization performance corresponding to the line rate and the CPU load of the receiving communication device 2R and included in optimization performance stored in the storage unit 23.

Thus, even if the CPU load of the receiving communication device 2R that is the destination device dynamically changes, the determiner 15 determines whether or not the data to be transmitted is to be optimized, based on the CPU load. Thus, the determiner 15 may appropriately determine whether or not the data to be transmitted is to be optimized.

### Sequence Flowchart Illustrating Example of Flow of Process of Generating Performance Characteristic Table

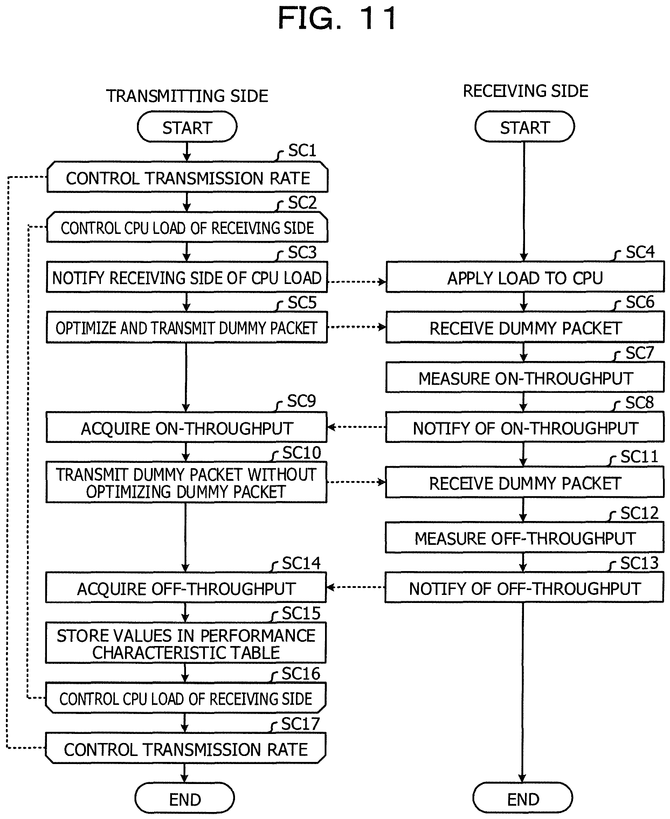

FIG. 11 is a sequence flowchart illustrating an example of the process of generating the performance characteristic table. The process, illustrated in FIG. 11, of generating the performance characteristic table includes the process of the aforementioned step S2 (transmitting side) and the process of the aforementioned step S23 (receiving side).

The "transmitting side" indicates the transmitting communication device 2S, while the "receiving side" indicates the receiving communication device 2R. The transmission rate controller 19 executes control to change the rate of transmitting the dummy packet. Thus, the transmission rate controller 19 repeats a loop process of steps SC1 to SC17.

For example, as described above, the transmission rate controller 19 may repeat processes of steps SC1 to SC17 while changing the rate of transmitting the dummy packet to 5 Mbps, 10 Mbps, 50 Mbps, and 100 Mbps.

The controller 12S executes control to change the CPU load of the receiving communication device 2R. Thus, the controller 12S repeats a loop process of steps SC2 to SC16. For example, as described above, the controller 12S changes the CPU load to be applied to the receiving communication device 2R to 5%, 20%, 40%, 60%, 80%, and 100%.

The controller 12S notifies the load applier 22 of the receiving communication device 2R of the value of the CPU load to be applied (in step SC3). When the receiving communication device 2R receives the notification, the load applier 22 applies the notified load to the CPU of the receiving communication device 2R (in step SC4).

The optimization transmission processing unit 13 optimizes the dummy packet generated by the measurement data generator 18 and the communication unit 24S transmits the optimized dummy packet (in step SC5). The communication unit 24R receives the optimized dummy packet (in step SC6).

The optimized dummy packet is restored by the optimization reception processing unit 16R. The performance measurer 21 measures the on-throughput based on the speed of the restoration process by the optimization reception processing unit 16R (in step SC7).

The receiving communication device 2R notifies the transmitting communication device 2S of information of the measured on-throughput (in step SC8). The transmitting communication device 2S acquires the information of the measured on-throughput (in step SC9).

The controller 12S executes control to transmit the dummy packet generated by the measurement data generator 18 to the receiving communication device 2R without the optimization of the dummy packet. Thus, the dummy packet that is not optimized is transmitted to the receiving communication device 2R (in step SC10).

The communication unit 24R of the receiving communication device 2R receives the dummy packet that is not optimized (in step SC11). The performance measurer 21 measures the off-throughput based on the rate of receiving the dummy packet by the communication unit 24R (in step SC12).

The receiving communication device 2R notifies the transmitting communication device 2S of information of the measured off-throughput (in step SC13). The transmitting communication device 2S acquires the information of the off-throughput (in step SC14).

Thus, the optimization performance (on-throughput and off-throughput) that corresponds to the transmission rate controlled by the transmission rate controller 19 and the CPU load, applied by the load applier 22, of the receiving communication device 2R is acquired.

The table processing unit 14 causes values to be stored in items for the on-throughput and off-throughput corresponding to the transmission rate and the CPU load of the receiving communication device 2R in the performance characteristic table stored in the storage unit 23 (in step SC15).

The transmitting communication device 2S executes the processes of steps SC3 to SC15 while changing the transmission rate and the CPU load of the receiving communication device 2R. Thus, the values are stored in the items of the performance characteristic table.

The aforementioned process is an example of the process of generating the performance characteristic table. As described above, the process of generating the performance characteristic table may be executed upon the activation of the transmitting communication device 2S and the receiving communication device 2R, for example.

It is preferable that the values be stored in the items of the performance characteristic table before the start of the communication by the application function unit 11S. Thus, in the aforementioned example, the process of generating the performance characteristic table is executed before the start of the communication by the application function unit 11S.

However, after the communication is started by the application function unit 11S, the values may be stored in the items of the performance characteristic table.

The transmission rate of the communication (communication executed between the transmitting communication device 2S and the receiving communication device 2R) between the application function unit 11S and the application function unit 11R and the CPU load of the receiving communication device 2R change.

The performance measurer 21 measures the throughput of the communication executed between the application function unit 11S and the application function unit 11R. The receiving communication device 2R notifies the transmitting communication device 2S of the throughput and conditions under which the throughput was measured.

The table processing unit 14 causes the notified information to be stored in the performance characteristic table stored in the storage unit 23. Thus, the performance characteristic table may be generated during the communication by the application function unit 11S.

### Application Example 1

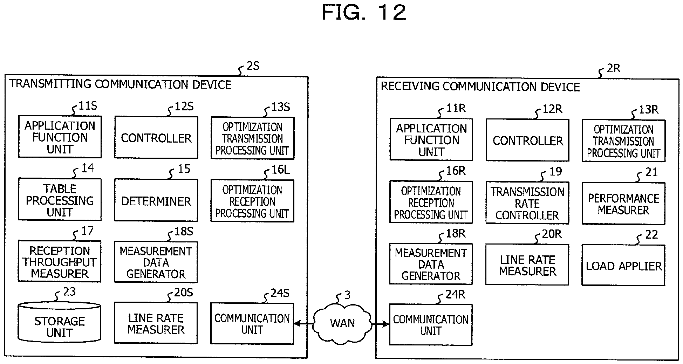

Next, an application example 1 is described. FIG. 12 is a diagram illustrating the application example 1. In the aforementioned embodiment, the receiving communication device 2R periodically notifies the transmitting communication device 2S of the load information indicating the CPU load of the receiving communication device 2R.

The determiner 15 determines whether or not the data to be transmitted is to be optimized, based on the CPU load of the receiving communication device 2R and the transmission rate. Since the CPU load of the receiving communication device 2R changes over time, there is a possibility that the latest notified CPU load of the receiving communication device 2R may be different from the CPU load of the receiving communication device 2R when the determiner 15 makes the determination.

In this case, it is difficult for the determiner 15 to appropriately determine whether or not the data to be transmitted is to be optimized. Although it is considered that the transmitting communication device 2S acquires the load information from the receiving communication device 2R upon the determination by the determiner 15, it takes some time until the acquisition of the load information.

It is, therefore, difficult for the transmitting communication device 2S to acquire load information indicating the real-time CPU load of the receiving communication device 2R. As a result, it is difficult for the determiner 15 to appropriately determine whether or not the data to be transmitted is to be optimized.

In the application example 1, the transmitting communication device 2S generates a load table indicating CPU loads of the receiving communication device 2R that were measured under various conditions. The load table is an example of a second table.

Based on the load table, the determiner 15 estimates the CPU load of the receiving communication device 2R and determines whether or not the data to be transmitted is to be optimized.

Thus, the determiner 15 of the transmitting communication device 2S determines whether or not the data to be transmitted is to be optimized without the acquisition of the load information from the receiving communication device 2R. Thus, the determiner 15 may appropriately determine whether or not the data to be transmitted is to be optimized.

In the example of FIG. 12, the controller 12S of the transmitting communication device 2S executes control to notify the receiving communication device 2R of transmission rates and information indicating CPU loads. The notification includes information indicating the different transmission rates and the different CPU loads.

For example, the notification includes information indicating transmission rates of 5 Mbps, 10 Mbps, 50 Mbps, and 100 Mbps and includes information indicating that the CPU loads to be applied to the receiving communication device 2R are 5%, 20%, 40%, 60%, 80%, and 100%.

The optimization transmission processing unit 13R of the receiving communication device 2R optimizes a dummy packet generated by the measurement data generator 18R. The dummy packet (optimized dummy packet) described in the application example 1 is data to be used for the generation of the load table and is an example of second measurement data.

The transmission rate controller 19 changes, based on the aforementioned notification, the rate of transmitting the optimized dummy packet. In addition, the load applier 22 changes the CPU load of the receiving communication device 2R based on the aforementioned notification.

Thus, the optimized dummy packet is transmitted from the receiving communication device 2R to the transmitting communication device 2S, while the transmission rate and the CPU load of the receiving communication device 2R are changed.

The communication unit 24S of the transmitting communication device 2S receives the optimized packet. An optimization reception processing unit 16L executes the restoration process. The reception throughput measurer 17 measures the throughput (on-throughput). The table processing unit 14 causes values based on the results of the measurement to be stored in the load table stored in the storage unit 23.

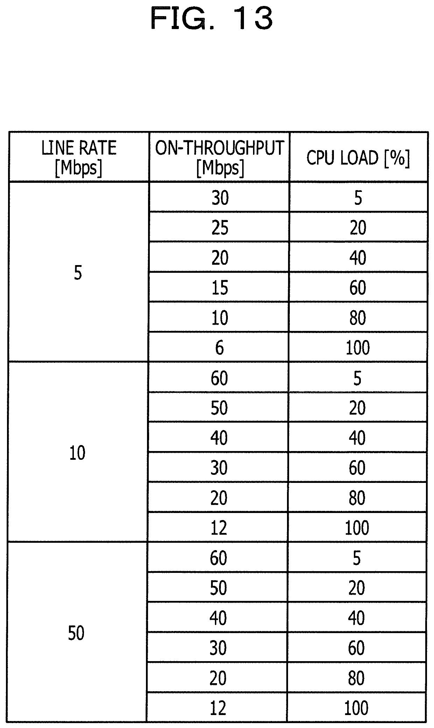

FIG. 13 illustrates an example of the load table. The load table is a table in which the line rates, the on-throughput, and the CPU loads are associated with each other.

The table processing unit 14 associates the on-throughput measured by the reception throughput measurer 17 with the transmission rates notified to the receiving communication device 2R and the CPU loads notified to the receiving communication device 2R and causes the on-throughput measured by the reception throughput measurer 17 to be stored in the load table.

When the communication unit 24S of the transmitting communication device 2S receives the optimized data from the receiving communication device 2R, the line rate measurer 20S measures the line rate of the communication line between the transmitting communication device 2S and the receiving communication device 2R. The line rate measured by the line rate measurer 20S is the line rate of the communication from the receiving communication device 2R to the transmitting communication device 2S.

In addition, the reception throughput measurer 17 measures the on-throughput of the optimized data. The controller 12S searches the load table stored in the storage unit 23 based on the measured line rate and the measured on-throughput and acquires a CPU load associated with the measured line rate and the measured on-throughput.

Then, the transmission communication device 2S estimates the CPU load. Thus, the transmitting communication device 2S may estimate the CPU load of the receiving communication device 2R without acquiring the load information indicating the CPU load from the receiving communication device 2R.

### Example of Flowchart Illustrating Flow of Process in Application Example 1

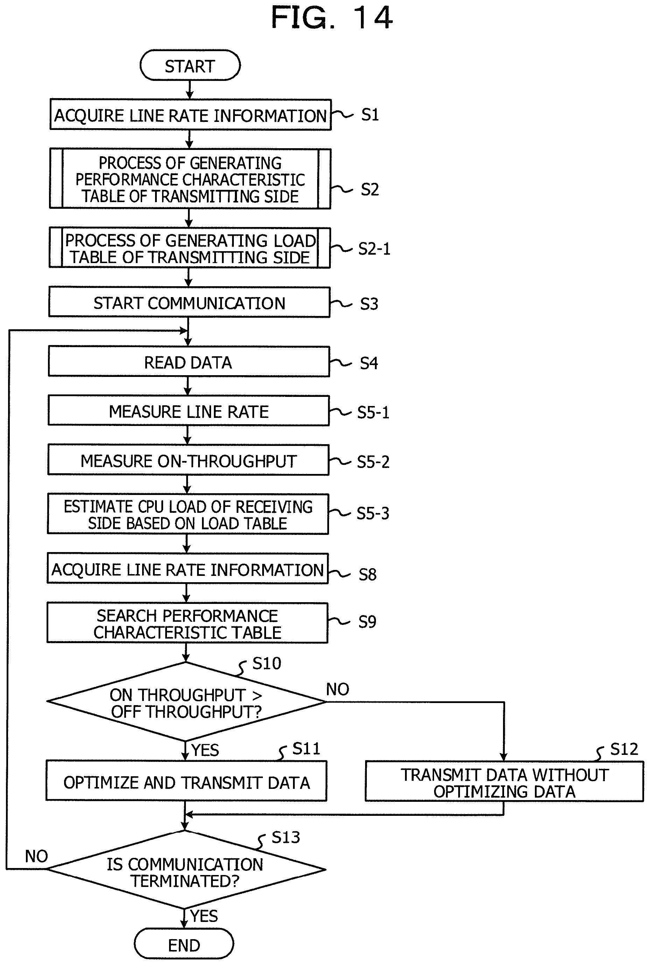

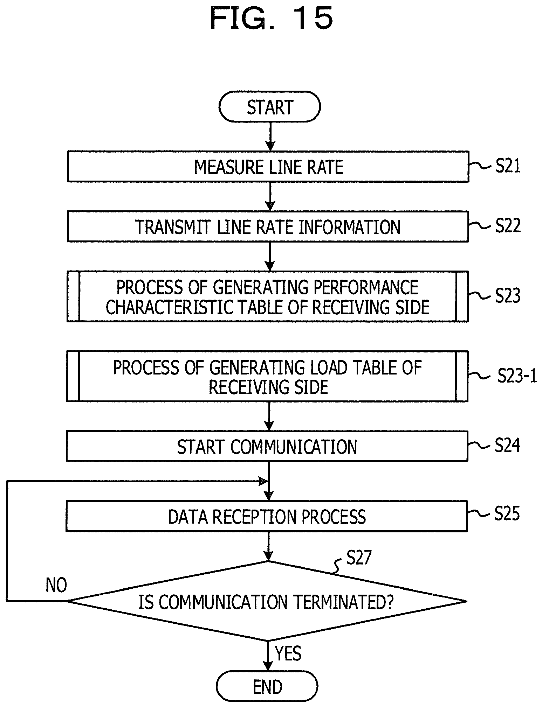

FIG. 14 is a flowchart illustrating an example of the flow of a process to be executed by the transmitting communication device 2S in the application example 1, while FIG. 15 is a flowchart illustrating an example of the flow of a process to be executed by the receiving communication device 2R in the application example 1.

A description of processes that are included in the flowchart of FIG. 14 and the same as or similar to the processes described with reference to the flowchart of FIG. 9 is omitted. A description of processes that are included in the flowchart of FIG. 15 and the same as or similar to the processes described with reference to the flowchart of FIG. 10 is omitted.

As illustrated in the flowchart of FIG. 14, the transmitting communication device 2S executes a process of generating the load table of the transmitting side (in step S2-1). Thus, values are stored in items of the load table stored in the storage unit 23.

When the communication is started by the application function units 11, the communication is executed between the transmitting communication device 2S and the receiving communication device 2R. When the communication unit 24S of the transmitting communication device 2S receives the optimized data, the line rate measurer 20S measures the line rate (line rate of the communication from the receiving communication device 2R to the transmitting communication device 2S (in step S5-1).

The reception throughput measurer 17 measures the on-throughput (in step S5-2). The controller 12S acquires, from the load table stored in the storage unit 23, the CPU load of the receiving communication device 2R that is associated with the measured line rate and the measured on-throughput. Thus, the CPU load of the receiving communication device 2R is estimated (in step S5-3).

As illustrated in the flowchart of FIG. 15, a process of generating a load table of the receiving side (in step S23-1) is added to the process to be executed by the receiving communication device 2R. A process of generating the performance characteristic table in the application example 1 is the same as that described in the embodiment, and a description thereof is omitted.

### Sequence Chart Illustrating Example of Process of Generating Load Table in Application Example 1

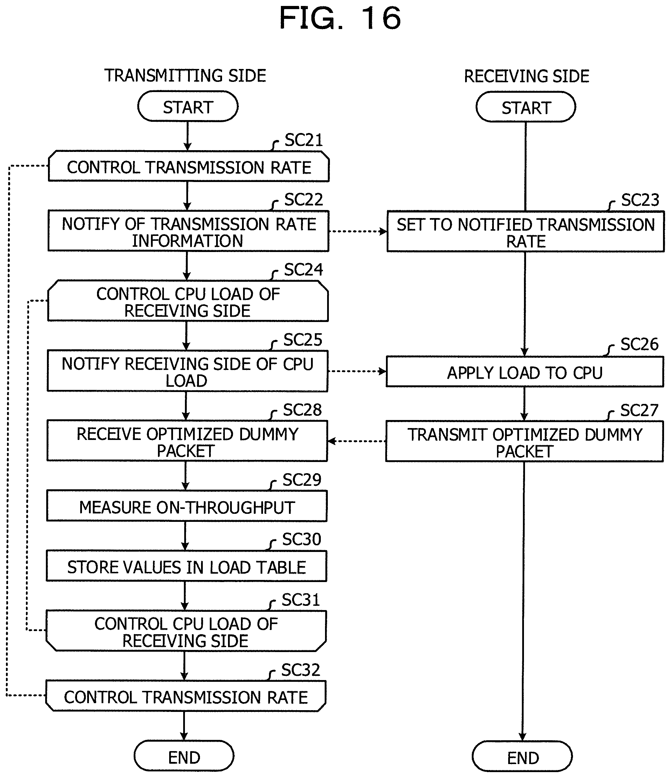

Next, a sequence chart illustrating an example of the process of generating the load table is described with reference to an example illustrated in FIG. 16. The transmitting communication device 2S controls the transmission rate by repeating the processes of steps S21 to S32.

The controller 12S executes control to notify the receiving communication device 2R of transmission rate information indicating the rate of transmitting the dummy packet (in step SC22). The communication unit 24R of the receiving communication device 2R receives the notification.

The transmission rate controller 19 sets the rate of transmitting the dummy packet based on the notified transmission rate information (in step SC23). After the transmission rate is set, a process of controlling the receiving-side CPU load in steps SC24 to SC31 is repeatedly executed.

The controller 12S notifies the receiving communication device 2R of a CPU load to be applied (in step S25). The load applier 22 applies the CPU load to the receiving communication device 2R based on the notified CPU load (in step SC26).

The optimization transmission processing unit 13R optimizes the dummy packet generated by the measurement data generator 18R. The communication unit 24R transmits the optimized dummy packet to the transmitting communication device 2S at the transmission rate set by the transmission rate controller 19 (in step SC27).

The communication unit 24S of the transmitting communication device 2S receives the optimized dummy packet (in step SC28). Then, the optimization reception processing unit 16L executes the process of restoring the optimized dummy packet, and the reception throughput measurer 17 measures the on-throughput (in step SC29).

The table processing unit 14 associates the measured on-throughput with the transmission rate notified to the receiving communication device 2R and the CPU load notified to the receiving communication device 2R and causes the measured on-throughput to be stored in the load table (in step SC30). The controller 12S repeats the processes of steps SC24 to SC31 while changing the CPU load to be applied to the receiving communication device 2R.

In addition, the controller 12S repeats the processes of steps SC21 to SC32 while changing the rate of transmitting the dummy data from the receiving communication device 2R. Then, the process of generating the load table is terminated.

Thus, in the application example 1, the transmitting communication device 2S estimates the CPU load of the receiving communication device 2R without acquiring, from the receiving communication device 2R, the load information indicating the CPU load of the receiving communication device 2R.

Then, the determiner 15 determines whether or not the data to be transmitted is to be optimized, based on the estimated CPU load of the receiving communication device 2R. Thus, the CPU load of the receiving communication device 2R may be estimated in real time, and whether or not the data to be transmitted is to be optimized may be appropriately determined.

### Application Example 2

In the aforementioned embodiment and the aforementioned application example 1, the determiner 15 determines, based on the CPU load of the receiving communication device 2R, whether or not the data to be transmitted is to be optimized. If the performance of the CPU of the receiving communication device 2R is lower than the performance of the CPU of the transmitting communication device 2S, and the difference between the performance of the CPU of the receiving communication device 2R and the performance of the CPU of the transmitting communication device 2S is large, the CPU load of the transmitting communication device 2S less affects the throughput.

On the other hand, if the difference between the performance of the CPU of the receiving communication device 2R and the performance of the CPU of the transmitting communication device 2S is small, it is expected that the CPU load of the transmitting communication device 2S affects the throughput.

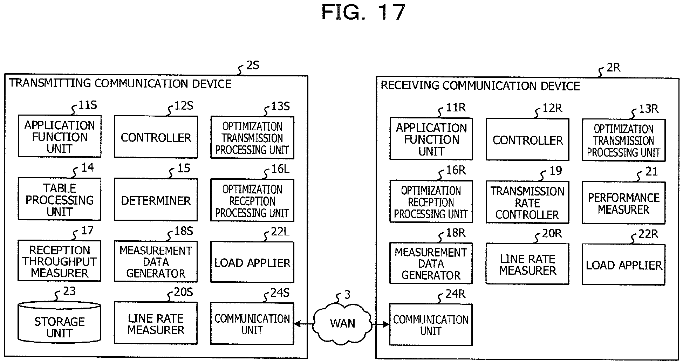

In an application example 2, the determiner 15 determines whether or not the data to be transmitted is to be optimized, based on not only the CPU load of the receiving communication device 2R but also the CPU load of the transmitting communication device 2S. FIG. 17 is a diagram illustrating the application example 2. In the example of FIG. 17, load appliers 22 are included in the receiving and transmitting communication devices 2R and 2S, respectively.

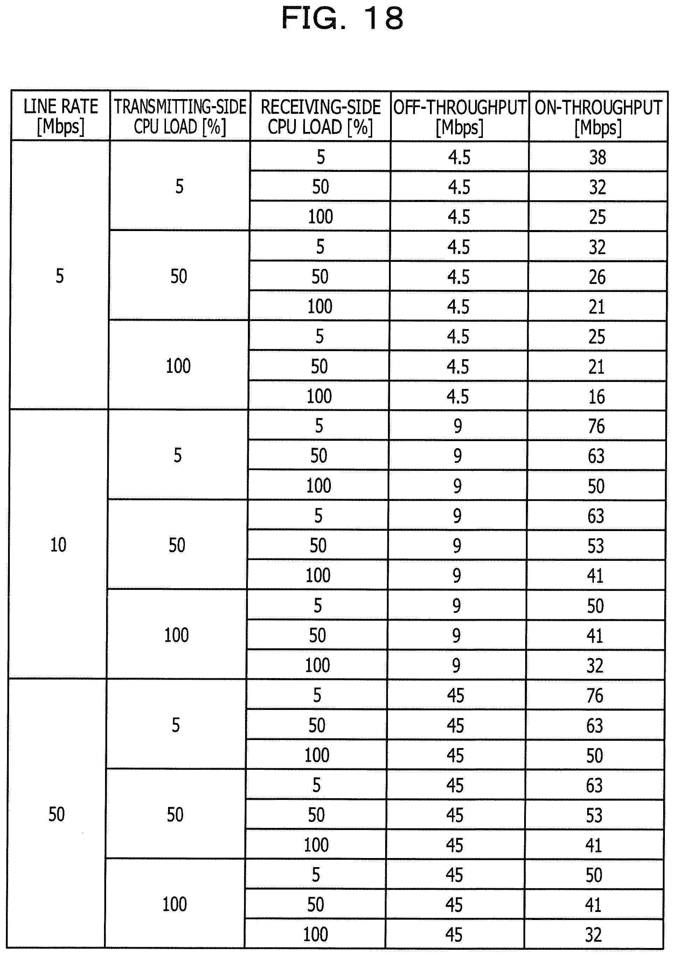

FIG. 18 illustrates an example of a performance characteristic table according to the application example 2. In the performance characteristic table of the example of FIG. 18, optimization performance that corresponds to the line rate, the CPU load of the transmitting communication device 2S, the CPU load of the receiving communication device 2R is stored. Values of the optimization performance are values of the on-throughput and values of the off-throughput.

The performance characteristic table according to the application example 2 has, added thereto, an item for the transmitting-side CPU load (CPU load of the transmitting communication device 2S), compared with the performance characteristic table according to the embodiment.

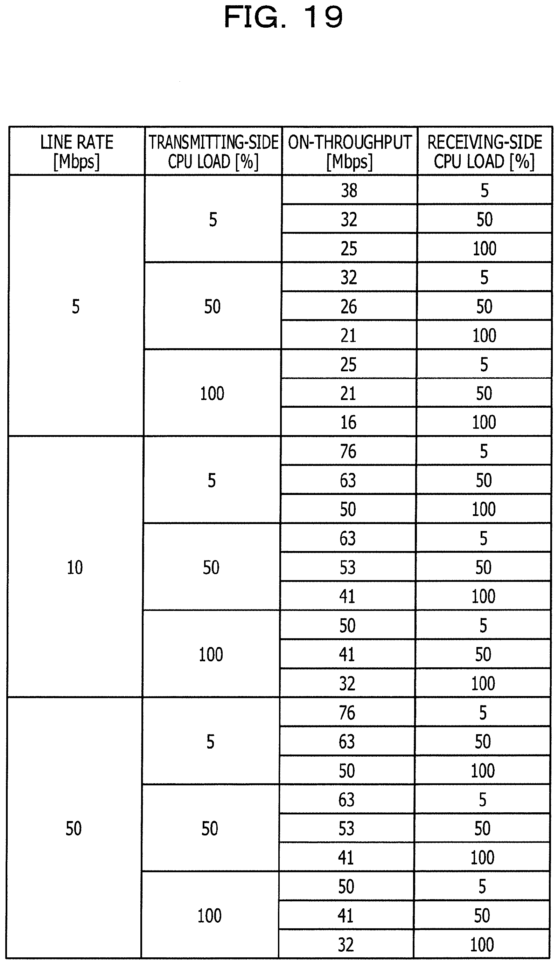

FIG. 19 illustrates an example of a load table according to the application example 2. The load table according to the application example 2 includes items for the line rate, the transmitting-side CPU load, the on-throughput, and the receiving-side CPU load. The load table according to the application example 2 has, added thereto, the item for the transmitting-side CPU load, compared with the load table according to the application example 1.

Thus, in the application example 2, since the determiner 15 makes the determination based on the CPU load of the receiving communication device 2R and the CPU load of the transmitting communication device 2S, the determiner 15 may appropriately determine whether or not the data to be transmitted is to be optimized.

### Example of Flowchart Illustrating Flow of Process in Application Example 2

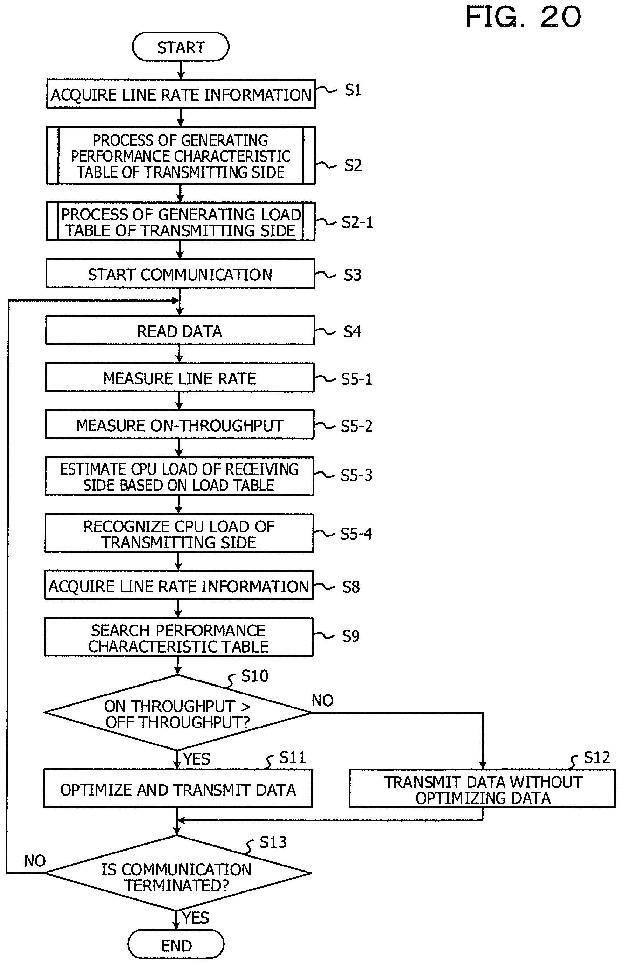

FIG. 20 is a flowchart illustrating an example of the flow of a process to be executed by the transmitting communication device 2S in the application example 2. The process that is executed by the transmitting communication device 2S in the application example 2 includes step S5-4 and the process that is executed by the transmitting communication device 2S in the application example 1. The other processes are the same as or similar to the processes in the application example 1, and a description thereof is omitted.

The controller 12S recognizes the CPU load of the transmitting communication device 2S (in step S5-4). Thus, the optimization performance that corresponds to the line rate, the CPU load of the receiving communication device 2R, and the CPU load of the transmitting communication device 2S is searched, and whether or not the data to be transmitted is to be optimized is determined based on the on-throughput and the off-throughput that are indicated by the optimization performance.

Processes that are executed by the receiving communication device 2R in the application example 2 are similar to the processes that are executed by the receiving communication device 2R in the application example 1. However, the process of generating the performance characteristic table of the receiving side (in step S23) and the process of generating the load table of the receiving side (in step S23-1) in the application example 2 are different from those described in the application example 1.

### Sequence Chart Illustrating Example of Process of Generating Performance Characteristic Table in Application Example 2

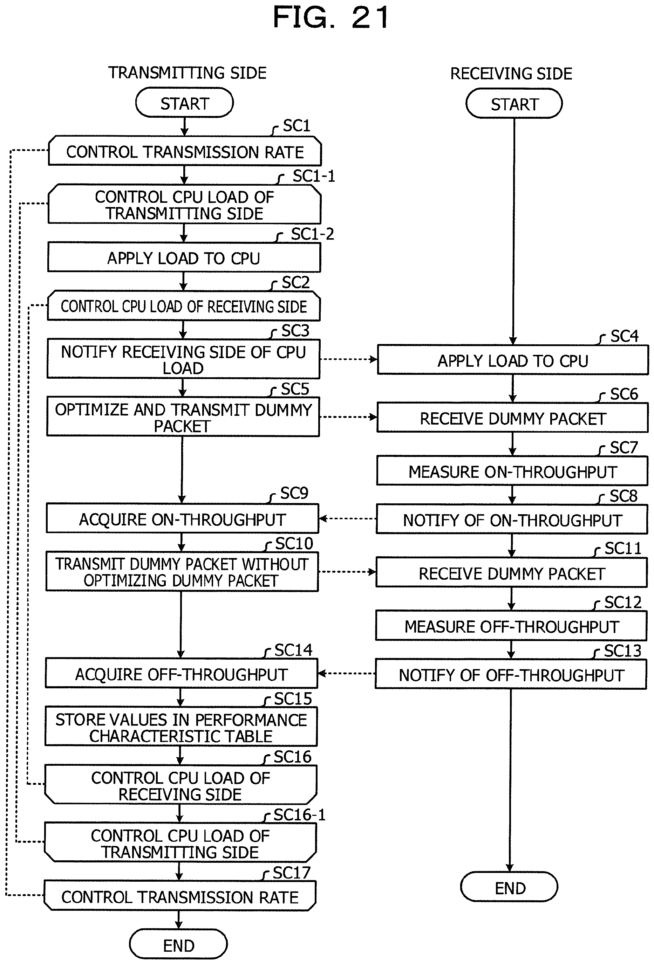

FIG. 21 illustrates an example of a sequence chart of the process of generating the performance characteristic table in the application example 2. The process of generating the performance characteristic table in the application example 2 is obtained by adding a loop process (of steps SC1-1 to steps SC16-1) of controlling the CPU load of the transmitting side to the process of generating the performance characteristic table in the aforementioned embodiment.

In the application example 2, in the loop process of controlling the CPU load of the transmitting side, the controller 12S applies a load to the CPU of the transmitting communication device 2S (in step SC1-2). Every time the loop process of controlling the CPU load of the transmitting side is executed, the controller 12S changes the CPU load to be applied to the transmitting communication device 2S.

### Sequence Chart Illustrating Example of Process of Generating Load Table in Application Example 2

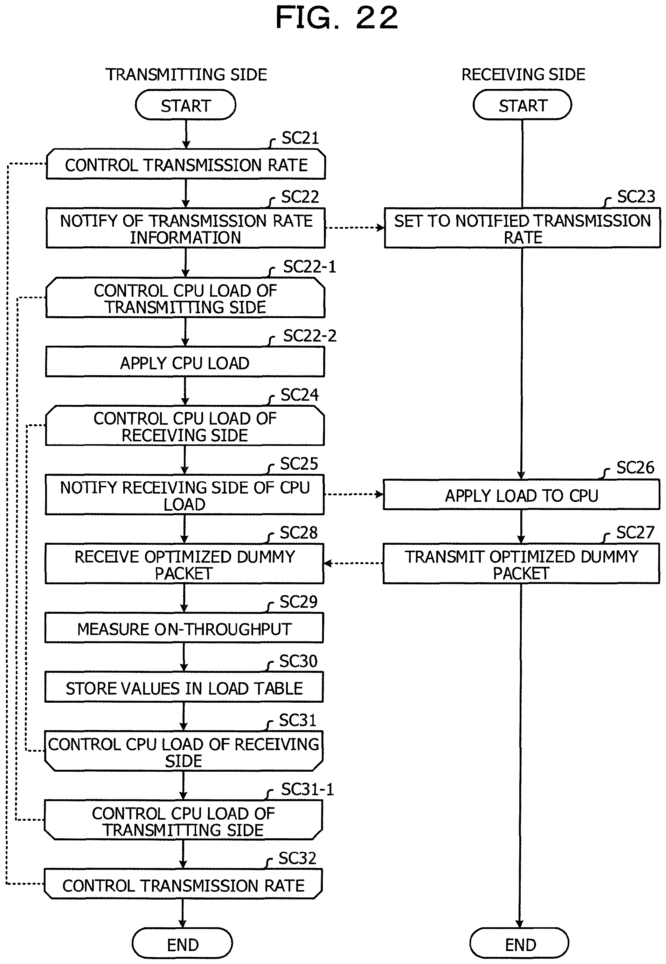

FIG. 22 illustrates an example of the process of generating the load table in the application example 2. A loop process (of steps SC22-1 to SC31-1) of controlling the CPU load of the transmitting side is added to the process of generating the load table in the application example 1.

In the application example 2, in the loop process of controlling the CPU load of the transmitting side, the load applier 22S applies a load to the CPU of the transmitting communication device 2S (in step SC22-2). Every time the loop process of controlling the CPU load of the transmitting side is executed, the controller 12S changes the CPU load to be applied to the transmitting communication device 2S.

### Example of Hardware Configurations of Communication Devices

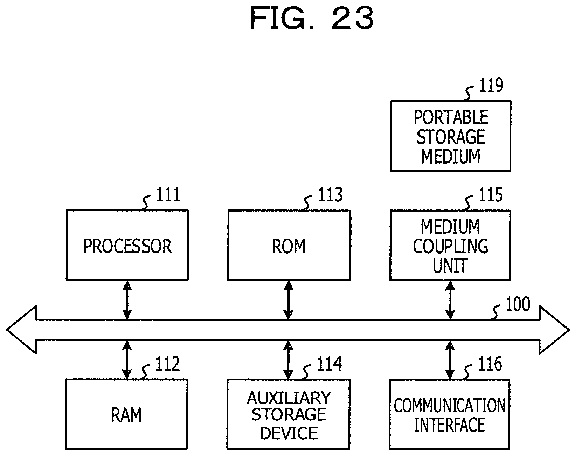

Next, an example of each of hardware configurations of the communication devices 2 is described with reference to FIG. 23. As illustrated in the example of FIG. 23, a processor 111, a RAM 112, a ROM 113, an auxiliary storage device 114, a medium coupling unit 115, and a communication interface 116 are connected to a bus 100.

The processor 111 is an arbitrary processing circuit. The processor 111 executes a program loaded in the RAM 112. As the process to be executed, a program that executes the processes described in the embodiment may be applied. The ROM 113 is a nonvolatile storage device storing the program to be loaded in the RAM 112.

The auxiliary storage device 114 is a storage device storing information of various types. For example, a hard disk drive, a semiconductor memory, or the like may be applied to the auxiliary storage device 114. The medium coupling unit 115 is installed and able to be coupled to a portable storage medium 119.

As the portable storage medium 119, a portable memory, an optical disc (for example, a compact disc (CD), a digital versatile disc (DVD), or the like), or the like may be applied. The communication control program that executes the processes described in the embodiment may be stored in the portable storage medium 119.

In the communication device 2, the storage unit 23 may be achieved by the RAM 112, the auxiliary storage device 114, or the like. The communication unit 24 may be achieved by the communication interface 116. The other units, which are included in the communication device 2 and are not the storage unit 23 and the communication unit 24, may be achieved by executing the given communication control program by the processor 111.

Each of the RAM 112, the ROM 113, the auxiliary storage device 114, and the portable storage medium 119 is an example of a computer-readable tangible storage medium. These tangible storage media are not temporal media such as signal carrier waves.

### Others

The embodiment is not limited to the aforementioned embodiment and may include various configurations and embodiments without departing from the gist of the embodiment.

### REFERENCE SIGNS LIST

- 1: System
- 2: Communication device
- 3: WAN
- 11: Application function unit
- 12: Controller
- 13: Optimization transmission processing unit
- 14: Table processing unit
- 15: Determiner
- 16: Optimization reception processing unit
- 17: Reception throughput measurer
- 18: Measurement data generator
- 19: Transmission rate controller
- 20: Line rate measurer
- 21: Performance measurer
- 22: Load applier
- 23: Storage unit
- 24: Communication unit
- 111: Processor
- 112: RAM
- 113: ROM

## Claims

1. A data transmitting device configured to transmit data to a data receiving device via a communication line, the data transmitting device comprising:
a determination unit configured to determine, based on first bandwidth information indicating a first bandwidth of the communication line from the data transmitting device to the data receiving device and first load information indicating a first load of the data receiving device, whether a first process is to be executed on first data before the first data is transmitted to the data receiving device;
an optimization transmission processing unit configured to execute the first process on the first data when it is determined that the first process is to be executed; and
communication unit configured to transmit, to the data receiving device, the first data on which the first process is executed when it is determined that the first process is to be executed, and transmit, to the data receiving device, the first data without executing the first process on the first data when it is not determined that the first process is to be executed.

2. The data transmitting device according to claim 1, wherein the first process includes at least one of a removing process of removing duplication of the first data and a compressing process of compressing the first data.

3. The data transmitting device according to claim 2, wherein
when the first process includes the removing process, the data receiving device stores the first data in associating with index information, and reads the first data from the cache memory based on the index information transmitted from the data transmitting device, and
when the first process includes the compressing process, the data receiving device restores the first data.

4. The data transmitting device according to claim 3, wherein
the communication unit is further configured to transmit, to the data receiving device, second data on which the first process is executed and the second data on which the first process is not executed,
the determination unit is further configured to acquire first throughput information indicating first throughput related to reception, by the data receiving device, of the second data on which the first process is executed, and acquire second throughput information indicating second throughput related to reception, by the data receiving device, of the second data on which the first process is not executed, and
the determination unite is configured to determine whether the first process is to be executed on the first data, based on the performance information based on performance information associating the first throughput information and the second throughput information with the first bandwidth information and the first load information.

5. The data transmitting device according to claim 4,
wherein the determination unit is further configured to:
compare the first throughput with the second throughput,
determine that the first process is to be executed on the first data when the first throughput is higher than the second throughput, and
determine that the first process is not to be executed on the first data when the second throughput is equal to or higher than the first throughput.

6. The data transmitting device according to any of claims 4 and 5,
wherein the determination unit is further configured to acquire the first load information, the first throughput information, and the second throughput information from the data receiving device.

7. The data transmitting device according to any of claims 2 to 6,
wherein
the communication unit is further configured to receive, from the data receiving device, third data on which the first process is executed by the data receiving device, and
the first load is identified based on third throughput information indicating third throughput related to the reception, by the data transmitting device, of the third data on which the first process is executed and second bandwidth information indicating a second bandwidth of the communication line from the data receiving device to the data transmitting device.

8. The data transmitting device according to any of claims 1 to 7,
wherein the determination unit is configured to determine whether the first process is to be executed, based on the first load information, the first bandwidth information, and second load information indicating a second load of the data transmitting device.

9. The data transmitting device according to any of claims 1 to 8,
wherein the first load is a process load of a second processor included in the data receiving device.

10. The data transmitting device according to claim 8, wherein the second load is a process load of the first processor.

11. A method of transmitting data from a data transmitting device to a data receiving device via a communication line, the method comprising:
determining, by the data transmitting device, based on first bandwidth information indicating a first bandwidth of the communication line from the data transmitting device to the data receiving device and first load information indicating a first load of the data receiving device, whether a first process is to be executed on first data before the first data is transmitted to the data receiving device;
when it is determined that the first process is to be executed, executing the first process on the first data, and transmitting, to the data receiving device, the first data on which the first process is executed; and
when it is not determined that the first process is to be executed, transmitting the first data to the data receiving device without executing the first process on the first data.

12. The method according to claim 11, wherein the executing of the first process includes executing at least one of a removing process of removing duplication of the first data and a compressing process of compressing the first data.

13. The method according to claim 12, further comprising:
when the first process includes the removing process, storing, by the data receiving device, the first data in associating with index information, and reading, by the data receiving device, the first data from the cache memory based on the index information transmitted from the data transmitting device; and
when the first process includes the compressing process, restoring, by the data receiving device, the first data.

14. The method according to claim 13, further comprising:
transmitting, by the data transmitting device, to the data receiving device, second data on which the first process is executed;
acquiring, by the data transmitting device, first throughput information indicating first throughput related to reception of the data receiving device, of the second data on which the first process is executed;
transmitting, by the data transmitting device, to the data receiving device, the second data on which the first process is not executed;
acquiring, by the data transmitting device, second throughput information indicating second throughput related to reception of the data receiving device, of the second data on which the first process is not executed;
generating, by the data transmitting device, performance information associating the first throughput information and the second throughput information with the first bandwidth information and the first load information; and
determining, by the data transmitting device, whether the first process is to be executed on the first data, based on the performance information.

15. A data transmitting program which, when executed on a computer, causes the computer to carry out the method of transmitting data according to any of claims 11 to 14.
